# EUROPÄISCHE PATENTSCHRIFT

(11) **EP 1 583 021 B1**
(45) Veröffentlichungstag und Bekanntmachung des Hinweises auf die Patenterteilung: **17.10.2007**
(21) Anmeldenummer: 05006682.8
(22) Anmeldetag: 26.03.2005
(51) Int. Cl.: G06K 7/10, G06K 9/18

(54) **Optoelektronische Vorrichtung zur Erfassung von Barcodes**
Opto-electronic device for recognising bar code symbols
Dispositif optoélectronique de lecture de codes à barres

(30) Priorität: 01.04.2004 DE 102004015955
(43) Veröffentlichungstag der Anmeldung: 05.10.2005
(73) Patentinhaber: Leuze electronic GmbH + Co KG, 73277 Owen/Teck (DE)
(72) Erfinder: Moll, Georg, 72655 Altdorf (DE); Stepan, Jürgen, 73252 Lenningen (DE)
(74) Vertreter: Ruckh, Rainer Gerhard

(56) Entgegenhaltungen:
- EP-A- 0 419 226
- DE-A1- 19 537 953
- US-B1- 6 343 741

## Beschreibung

Die Erfindung betrifft eine optoelektronische Vorrichtung zur Erfassung von Barcodes gemäß dem Oberbegriff des Anspruchs 1.

Ein derartige optoelektronische Vorrichtung ist aus der DE 195 37 953 A1 bekannt. Diese optoelektronische Vorrichtung umfasst einen Sendelichtstrahlen emittierenden Sender und einen Empfänger, wobei die Sendelichtstrahlen über die Barcodes geführt werden und die von den Barcodes reflektierten Empfangslichtstrahlen im Empfänger in ein das Empfangssignal bildendes Spannungssignal umgesetzt werden. Das Empfangssignal wird in einem Differenzierer differenziert und zur Auswertung einer Schwellwerteinheit zugeführt, in der die Empfangssignale mit von den Amplitudenwerten des differenzierten Empfangssignals abhängigen Schwellwerten bewertet werden. Zur Generierung der Schwellwerte weist die Schwellwerteinheit einen Multiplizierer auf, in dem der jeweils aktuelle Spitzenwert des differenzierten Empfangssignals mit einem Faktor a, der im Bereich -1 < a < 0 liegt, multipliziert wird, falls der Betrag des Spitzenwertes einen vorgegebenen Mindestwert überschreitet. Der darauffolgende Spitzenwert wird mit diesem Schwellwert in einer Bewertungseinheit verglichen, falls dessen Vorzeichen mit dem vorhergehenden Spitzenwert nicht übereinstimmt. Bei zwei aufeinanderfolgenden Spitzenwerten gleichen Vorzeichens wird einer der Spitzenwerte verworfen.

Durch die adaptive Nachführung des Schwellwerts auf die aktuellen Spitzenwerte der differenzierten Empfangssignalamplituden können Fehlsignale aufgrund von Rauscheinflüssen minimiert werden, wodurch die Nachweissicherheit bei der Barcodeerfassung erhöht wird.

Voraussetzung für eine fehlerfreie Erfassung eines Barcodes ist jedoch insbesondere auch bei dieser optoelektronischen Vorrichtung, dass der Codeanfang des Barcodes sicher erkannt wird. Der Grund hierfür liegt darin, dass bei derartigen optoelektronischen Vorrichtungen aus den differenzierten Empfangssignalen die Kantenlagen der den Barcode bildenden Strichelemente bestimmt werden. Zur Dekodierung des Barcodes werden zum Beispiel mittels eines RS-FlipFlops aus den Kantenlagensignalen binäre Signalfolgen generiert, welche dem Strichmuster des Barcodes entsprechen.

Wird eine vor dem Barcode liegende Störung detektiert, so kann diese als gültiger Signalspitzenwert klassifiziert werden und damit fälschlicherweise als Anfang des Barcodes interpretiert werden. Dann ist die durch das RS-Flip-Flop generierte binäre Signalfolge auf einen falschen Anfangspunkt bezogen, was zur Folge hat, dass die gesamte Kodierung des Barcodes in der Signalfolge verfälscht ist und nicht mehr dekodiert werden kann.

Derartige, den Codeanfang des Barcodes verfälschende Signale können beispielsweise durch lokale glänzende Flächen verursacht sein, durch welche die Sendelichtstrahlen der optoelektronischen Vorrichtung weggespiegelt werden, so dass sie nicht mehr zum Empfänger gelangen. Weiterhin können derartige Störungen durch Objektkanten hervorgerufen werden.

Der Erfindung liegt die Aufgabe zugrunde, eine optoelektronische Vorrichtung der eingangs genannten Art bereitzustellen, mittels derer auch bei Auftreten externer Störeinflüsse Barcodes fehlerfrei erfasst werden können.

Zur Lösung dieser Aufgabe sind die Merkmale des Anspruchs 1 vorgesehen. Vorteilhafte Ausführungsformen und zweckmäßige Weiterbildungen der Erfindung sind in den Unteransprüchen beschrieben.

Die erfindungsgemäße optoelektronische Vorrichtung dient zur Erfassung von Barcodes. Diese optoelektronische Vorrichtung weist einen Sendelichtstrahlen emittierenden Sender auf, wobei die Sendelichtstrahlen mittels einer Ablenkeinheit über die Barcodes geführt sind. Ebenso beinhaltet die erfindungsgemäße optoelektronische Vorrichtung einen Empfänger zum Empfang der von den Barcodes als Empfangslichtstrahlen zurückreflektierten Sendelichtstrahlen. Weiterhin weist diese optoelektronische Vorrichtung einen Differenzierer zur Differenzierung des am Ausgang des Empfängers anstehenden Empfangssignals auf. Ebenso beinhaltet die erfindungsgemäße optoelektronische Vorrichtung eine Auswerteeinheit zur Ermittlung der Kodierungen der Barcodes aus dem differenzierten Empfangssignals. Die Auswerteeinheit weist eine Bewertungseinheit zur Generierung eines Codeanfangsignals auf, welcher die Ausgangssignale zweier Spitzenwertgleichrichter zugeführt sind. Im ersten Spitzenwertgleichrichter werden die positiven Spitzenwerte und im zweiten Spitzenwertgleichrichter die negativen Spitzenwerte des differenzierten Empfangssignals gleichgerichtet. Das Ausgangssignal wenigstens eines Spitzenwertgleichrichters ist mittels eines Verzögerungsglieds verzögert. In der Bewertungseinheit wird das mit einem Faktor a mit 0 < a < 1 multiplizierte differenzierte Empfangssignal mit den Ausgangssignalen der Spitzenwertgleichrichter zur Generierung des Codeanfangsignals verglichen.

Durch die in der Bewertungseinheit vorgenommene Signalbewertung können externe Störsignale, welche die korrekte Erfassung des Codeanfangs eines Barcodes beeinträchtigen, erkannt und eliminiert werden. Dadurch können Fehllesungen von Barcodes aufgrund derartiger Störsignale mit hoher Sicherheit vermieden werden.

Der Erfindung liegt die Erkenntnis zugrunde, dass derartige Störsignale aufgrund von lokal reflektierenden Stellen oder von Objektkanten vor diesem Barcode zu einzelnen Signalspitzen des differenzierten Empfangssignals führen. Demgegenüber besteht der Barcode selbst aus regelmäßigen Folgen von dunklen und hellen Strichelementen, generell aus einer Folge von dunklen Kontrastmustern auf einem hellen Untergrund, wobei auch die Zone vor dem Barcode von dem hellen Untergrund gebildet ist.

Bei der Detektion eines derartigen Barcodes werden anhand des differenzierten Empfangssignals die Kantenlagen der einzelnen Strichelemente erfasst, wobei zu jedem Strichelement ein Hell-Dunkel-Übergang und ein Dunkel-Hell-Übergang als Kantensignal detektiert wird. Diese beiden Übergänge bilden aufeinander folgende positive und negative Signalspitzen des differenzierten Empfangssignals, welche sich von den einzelnen Störsignalen unterscheiden.

Durch den Vergleich des mit dem Faktor a multiplizierten differenzierten Empfangssignals mit aus den aktuellen Spitzenwerten der differenzierten Empfangssignals abgeleiteten Vergleichspegel können die auftretenden Störsignale sicher eliminiert werden. Zudem ist durch den in der Bewertungseinheit durchgeführten Signalvergleich gewährleistet, dass das Codeanfangsignal nur am Anfang eines Barcodes generiert wird, nicht jedoch mehrfach während der Barcodedetektion.

Die Erfindung wird im Nachstehenden anhand der Zeichnungen erläutert. Es zeigen:
- Figur 1:: Schematische Darstellung einer optoelektronischen Vorrichtung zur Erfassung von Barcodes.
- Figur 2:: Blockschaltbild einer Auswerteeinheit für die optoelektronische Vorrichtung gemäß Figur 1.
- Figur 3:: Zeitlicher Verlauf des Empfangssignals des Empfängers der optoelektronischen Vorrichtung bei Detektion eines Barcodes.
- Figur 4:: Zeitlicher Verlauf des differenzierten Empfangssignals.
- Figur 5a, b:: Zeitliche Verläufe der aus dem differenzierten Empfangssignal abgeleiteten Analogsignale mit die Kantenlagen der Barcodes definierenden Signalfolgen.
- Figur 6:: Diagramm gemäß Figur 5a mit zugehörigem adaptiven Schwellwert.
- Figur 7:: Signalverläufe zur Generierung eines Codeanfangsignals bei Detektion eines Barcodes in störungsfreier Umgebung.
- Figur 8:: Signalverläufe zur Generierung eines Codeanfangsignals bei Detektion eines Barcodes bei auftretendem Störsignal.

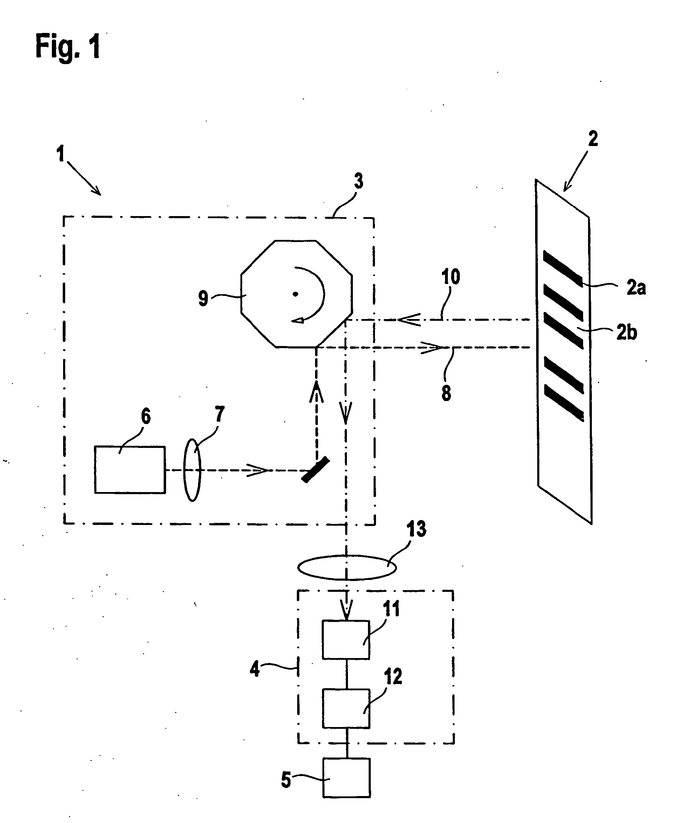

Figur 1 zeigt den prinzipiellen Aufbau einer optoelektronischen Vorrichtung 1 zum Erfassen von Barcodes 2. Die Barcodes 2 bestehen aus einer Folge von dunklen und hellen Strichelementen 2a, b. Dabei ist der Barcode 2, wie in Figur 1 dargestellt, von einem weißen Etikett oder dergleichen gebildet, auf welches als schwarze Kontrastmuster die dunklen Strichelemente 2a aufgedruckt sind. Die hellen Strichelemente 2b und die Zonen vor und hinter dem Barcode 2 sind von dem weißen Etikett oder generell von einem hellen Untergrund gebildet.

Die optoelektronische Vorrichtung 1 besteht im Wesentlichen aus einer Sendeeinheit 3, einer Empfangseinheit 4 sowie einer Auswerteeinheit 5. Die Sendeeinheit 3 besteht aus einem Sender 6, vorzugsweise einer Laserdiode, sowie aus einer dem Sender 6 vorgeschalteten Sendeoptik 7 zur Fokussierung der vom Sender 6 emittierten Sendelichtstrahlen 8. Die fokussierten Sendelichtstrahlen 8 werden über eine Ablenkeinheit 9, die im vorliegenden Ausführungsbeispiel von einem rotierenden Polygonspiegelrad gebildet ist, abgelenkt und über den zu detektierenden Barcode 2 geführt. Die Drehachse des Polygonspiegelrads ist senkrecht zur in Figur 1 dargestellten Äquatorialebene des Polygonspiegelrads angeordnet.

Die vom Barcode 2 reflektierten Empfangslichtstrahlen 10 werden über das Polygonspiegelrad zur Empfangseinheit 4 geführt. Die Empfangseinheit 4 besteht aus einem Empfänger 11, insbesondere einer Fotodiode, in der die Empfangslichtstrahlen 10 in ein elektrisches Empfangssignal gewandelt werden. Dem Empfänger 11 ist eine Signalvorverarbeitungsstufe 12 nachgeordnet. Zur Verbesserung der Nachweisempfindlichkeit ist der Empfangseinheit 4 eine Empfangsoptik 13 vorgeordnet.

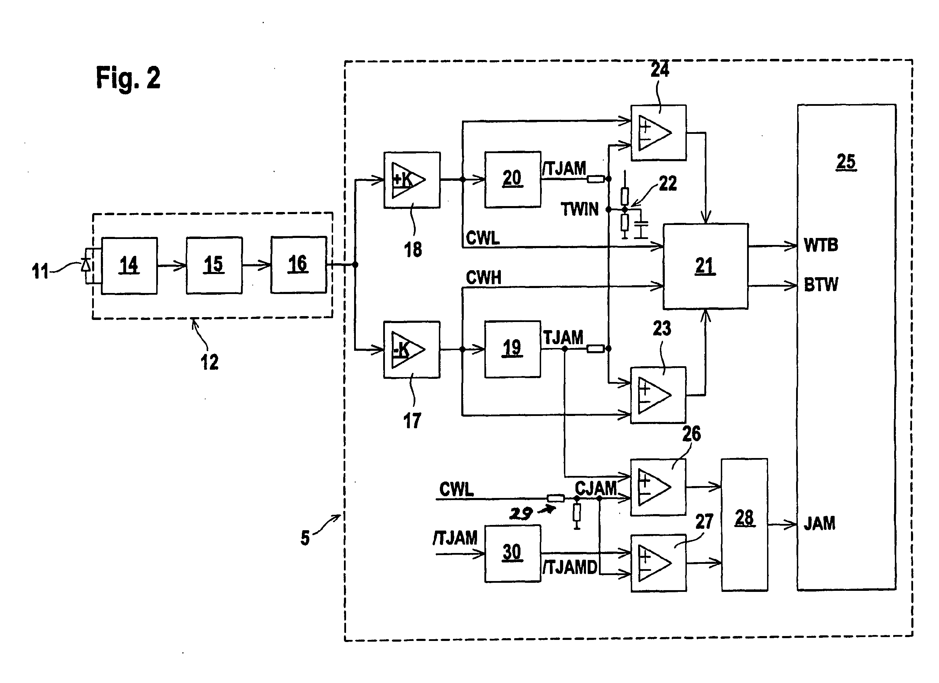

Figur 2 zeigt ein Blockschaltbild der Auswerteeinheit 5 und der Signalvorverarbeitungsstufe 12 der optoelektronischen Vorrichtung 1 gemäß Figur 1. Die Signalvorverarbeitungsstufe 12 umfasst einen Transimpedanzverstärker 14, einen ersten Differenzierer 15 sowie einen Tiefpassfilter 16.

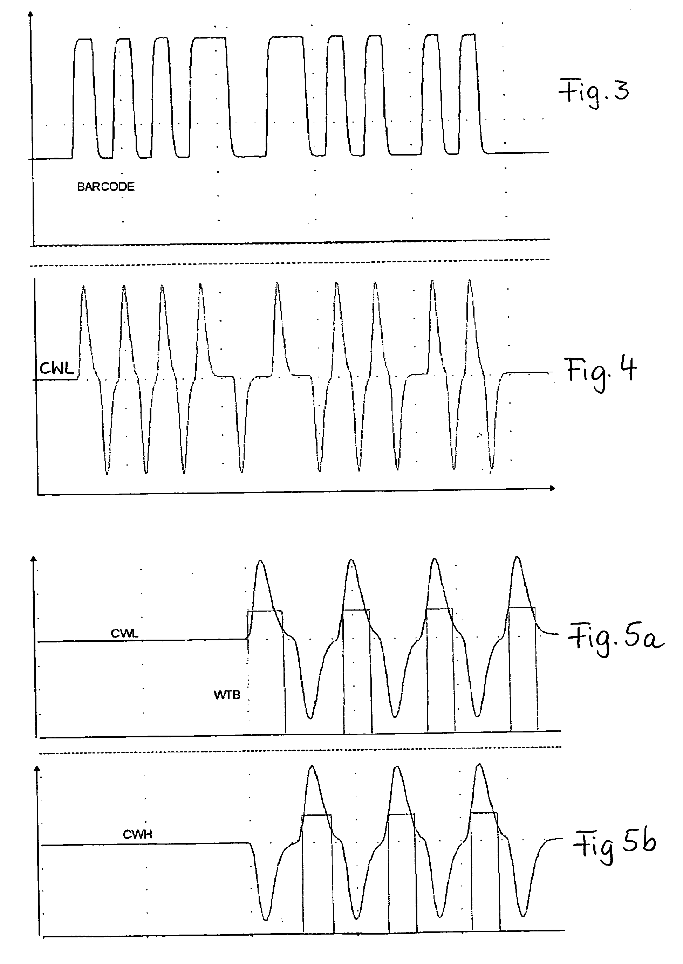

In dem Differenzierer 15 wird das Empfangssignal am Ausgang des Empfängers 11 differenziert. Figur 3 zeigt den typischen Verlauf eines Empfangssignals bei der Detektion eines Barcodes 2. Entsprechend der Folge der dunklen und hellen Strichelemente 2a, b des Barcodes 2 bildet das Empfangssignal eine binäre Signalfolge, in welcher der Code des Barcodes 2 enthalten ist. Figur 4 zeigt das im Differenzierer 15 differenzierte Empfangssignal. Die Kanten der Signalfolge des Empfangssignals gemäß Figur 2 entsprechen dabei den positiven und negativen Spitzenwerten des differenzierten Empfangssignals.

Das differenzierte Empfangssignal am Ausgang der Signalvorverarbeitungsstufe 12 wird der Auswerteeinheit 5 zugeführt, wobei dieses in zwei Zweige aufgespalten wird. Dabei wird das differenzierte Empfangssignal in einem ersten Verstärker 17 mit einem Verstärkungsfaktor -K (K > 0) verstärkt, wodurch ein Analogsignal CWH generiert wird. Gleichzeitig wird das differenzierte Empfangssignal in einem zweiten Verstärker 18 mit einem Verstärkungsfaktor +K verstärkt, wodurch ein zu CWH komplementäres Analogsignal CWL generiert wird.

Das Analogsignal CWH wird einem ersten Spitzenwertgleichrichter 19 zur Generierung eines gleichgerichteten Ausgangssignals TJAM zugeführt. Entsprechend wird das Analogsignal CWL einem zweiten Spitzenwertgleichrichter 20 zur Generierung eines gleichgerichteten Ausgangssignals /TJAM zugeführt.

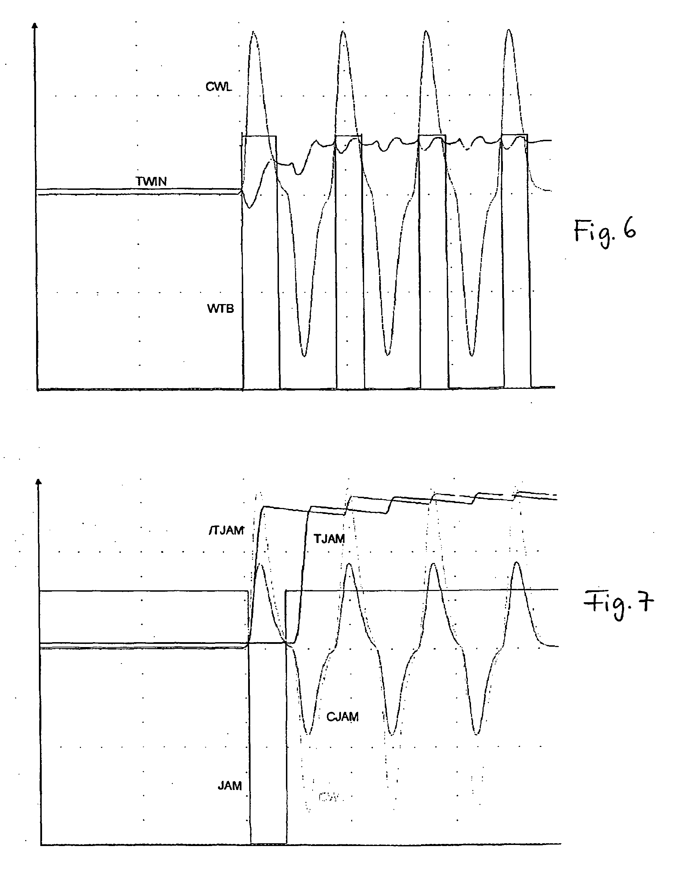

Die Analogsignale CWH, CWL werden parallel einem zweiten Differenzierer 21 zugeführt. Aus dem Analogsignal CWL wird dadurch die in Figur 5a dargestellte Signalfolge WTB generiert. Entsprechend wird aus dem Analogsignal CWH die in Figur 5b dargestellte Signalfolge BTW generiert. Die fallenden Flanken der Signalfolgen WTB und BTW definieren, wie in den Figuren 5a, b dargestellt, die Maxima der Analogsignale CWL, CWH und damit die Kantenlagen der Strichelemente 2a, b. Aus diesen Kantenlagen kann die Codestruktur des Barcodes 2 bestimmt werden.

Aufgrund von Rauscheinflüssen können den Analogsignalen CWL, CWH Signalspitzen überlagert sein, die zu einer Verfälschung der Signalfolgen WTB, BTW führen können.

Zur Eliminierung dieser Störeinflüsse werden die Analogsignale CWL, CWH mit einem adaptiven Schwellwert TWIN bewertet. Der adaptive Schwellwert TWIN wird dadurch generiert, dass die Ausgangssignale TJAM und /TJAM der Spitzenwertgleichrichter 19, 20 über ein RC-Glied 22 aufsummiert werden. Der so generierte adaptive Schwellwert wird auf jeweils einen Eingang zweier Vergleichseinheiten 23, 24 geführt, die im vorliegenden Fall von Komparatoren gebildet sind. In der ersten Vergleichseinheit 23 wird das Analogsignal CWH mit dem adaptiven Schwellwert TWIN verglichen. In der zweiten Vergleichseinheit 24 wird das Analogsignal CWL mit dem adaptiven Schwellwert TWIN verglichen. Die Ausgangssignale der Vergleichseinheiten 23, 24 sind auf den zweiten Differenzierer 21 geführt.

Der Verlauf des adaptiven Schwellwerts TWIN ist für das Analogsignal CWL in Figur 6 dargestellt. Ein entsprechender Signalverlauf wird für das Analogsignal CWH erhalten. Durch den Schwellwertvergleich mit TWIN werden Zeitfenster für die Analogsignale CWL, CWH derart gebildet, dass im Differenzierer 21 Signalfolgen BTW, WTB nur dann generiert werden können, wenn die Analogsignale CWL, CWH oberhalb des Schwellwerts TWIN liegen. Damit wird verhindert, dass bei kleinen Signalpegeln von CWL, CWH durch Rauscheinflüsse Signalspitzen generiert werden, die zu einer fehlerhaften Generierung von Signalen WTB, BTW führen würden.

Die auf diese Weise gefilterten Signalfolgen WTB, BTW werden in einen Microcontroller 25 eingelesen, wo die Dekodierung des Barcodes 2 erfolgt. Hierzu wird aus den fallenden Flanken der Signalfolgen BTW, WTB, welche die Kantenlagen der Strichelemente 2a, b des Barcodes 2 definieren, ein binäres Ausgangssignal generiert, welches der Struktur des Barcodes 2 entspricht. Zweckmäßigerweise ist hierzu ein nicht dargestelltes RS-Flip-Flop vorgesehen.

Um eine fehlerfreie Dekodierung des Barcodes 2 zu gewährleisten, wird in einer Bewertungseinheit ein Codeanfangsignal JAM generiert, mit welchem das binäre Ausgangssignal markiert wird, wodurch der Anfang eines Barcodes 2 eindeutig definiert ist.

Die Bewertungseinheit besteht im vorliegenden Fall aus zwei Komparatoren 26, 27, deren Ausgänge auf ein UND-Glied 28 geführt sind. Das am Ausgang des UND-Glieds 28 anstehende Codeanfangsignal JAM wird in den Microcontroller 25 zur Markierung der Signalfolgen BTW, WTB beziehungsweise des binären Ausgangssignals verwendet.

Zur Generierung des Codeanfangsignals JAM wird ein aus dem Analogsignal CWL abgeleitetes Signal CJAM verwendet. Dabei wird das Signal CJAM durch Multiplikation des Analogsignals CWL mit einem Faktor a gewonnen, wobei 0 < a < 1 ist. Im vorliegenden Fall wird das Signal CJAM aus dem Analogsignal mittels eines Spannungsteilers 29 generiert. Dabei liegt im vorliegenden Fall der Faktor a etwa bei 0,5. Das Signal CJAM ist jeweils auf einen der Eingänge der Komparatoren 26, 27 geführt.

Als erster Vergleichswert für das Signal CJAM wird das Ausgangssignal TJAM des Spitzenwertgleichrichters 19 auf einen Eingang des Komparators 26 geführt.

Zur Generierung des zweiten Vergleichswerts für das Signal CJAM wird das Ausgangssignal /TJAM des Spitzenwertgleichrichters 20 in einem Verzögerungsglied 30 verzögert. Das Verzögerungsglied 30 besteht im vorliegenden Fall aus einem Allpass. Das im Verzögerungsglied 30 generierte verzögerte Ausgangssignal /TJAMD bildet den zweiten Vergleichswert und wird auf den zweiten Eingang des Komparators 27 geführt.

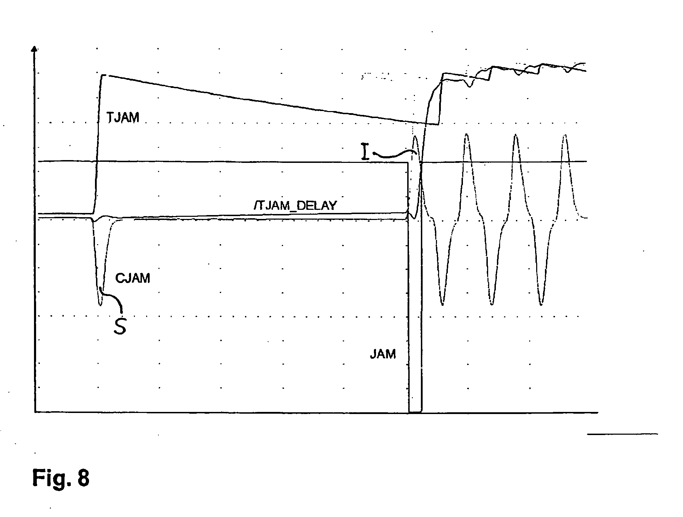

Durch den Vergleich des Signals CJAM mit den Vergleichswerten TJAM und /TJAMD wird ein zuverlässiges Codeanfangsignal JAM auch bei Auftreten von externen Störungen generiert. Dies ist in den Figuren 7 und 8 veranschaulicht.

Figur 7 zeigt den zeitlichen Verlauf des Analogsignals CWL und des daraus abgeleiteten Signals CJAM bei einer Barcodedetektion ohne Auftreten von Störeinflüssen. Dabei ist in Figur 7 der Anfang der Barcodedetektion dargestellt.

Solange die Sendelichtstrahlen 8 der optoelektronischen Vorrichtung 1 auf die helle Zone vor dem Barcode 2 gemäß Figur 1 auftreffen, liegt das Ausgangssignal CWL und damit das Signal CJAM konstant bei dem Wert Null.

Der erste positive Signalpeak des Ausgangssignals CWL entspricht der Detektion der Kante des ersten dunklen Strichelements 2a des Barcodes 2. Die weiteren positiven Signalpeaks entsprechen weiteren Übergängen von hellen Strichelementen 2b zu dunklen Strichelementen 2a. Die negativen Signalpeaks des Analogsignals entsprechen Übergängen von dunklen Strichelementen 2a zu hellen Strichelementen 2b des Barcodes 2.

Da das Ausgangssignal /TJAM aus dem Analogsignal CWL im Spitzenwertgleichrichter 20 generiert wird, wird das Ausgangssignal /TJAM mit den positiven Signalpeaks des Analogsignals CWL bis zu einem Maximalwert aufgeladen und sinkt nach Abklingen eines positiven Peaks von CWL entsprechend der Zeitkonstante des Spitzenwertgleichrichters 20 ab, bis der nächste positive Peak von CWL ansteht.

Entsprechend wird das Ausgangssignal TJAM im Spitzenwertgleichrichter 19 durch die positiven Peaks des Analogsignals CWH, welche den negativen Peaks des Analogsignals CWL entsprechen, aufgeladen.

Die dadurch erhaltenen Signalverläufe von TJAM und /TJAM sind in Figur 7 dargestellt.

Wie aus Figur 7 ersichtlich, überschreitet der erste Signalpeak des aus dem Analogsignal CWL abgeleiteten Signals CJAM das Ausgangssignal TJAM, welches den Vergleichswert im Komparator 26 bildet. Solange dies der Fall ist, spricht der Komparator 26 an und das Codeanfangsignal JAM wird, wie in Figur 7 dargestellt, gesetzt. Die fallende Flanke des Codeanfangsignal JAM definiert hierbei die Lage des Codeanfangs. Dabei ist das Codeanfangsignal JAM nur während der Dauer des ersten positiven Peaks von CWL gesetzt, da nur dann die Bedingung CJAM > TJAM erfüllt ist. Da die Strichelemente 2a, b der Barcodes 2 dicht zusammen liegen, entladen sich die Ausgangssignale TJAM und /TJAM während der Erfassung des Barcodes 2 nie vollständig, so dass insbesondere der Pegel von TJAM ständig oberhalb des Maximums des Signals CJAM bleibt. Durch die geeignete Wahl des Faktors a zur Generierung des Signals CJAM aus dem Analogsignal CWL ist somit gewährleistet, dass das Codeanfangsignal JAM nur einmal am Anfang der Barcodeerfassung gesetzt wird und somit den Anfang des Barcodes 2 exakt und eindeutig markiert.

In Figur 8 ist wiederum das aus dem Analogsignal CWL abgeleitete Signal CJAM dargestellt, welches entsprechend der Struktur des mit der optoelektronischen Vorrichtung 1 erfassten Barcodes 2 eine alternierende Folge von positiven und negativen Peaks aufweist. Im Unterschied zu dem Beispiel gemäß Figur 7 ist im vorliegenden Fall im Bereich der hellen Zone vor dem Barcode 2 eine Störung in Form einer Objektkante oder aufgrund einer lokalen reflektierenden Stelle vorhanden. Aufgrund dessen weist das Signal CJAM einen negativen Störimpuls auf, der in Figur 8 mit S bezeichnet ist. Auf diesen Störimpuls S folgen die von der Barcodedetektion stammenden positiven und negativen Peaks des Signals CJAM entsprechend der Signalfolge von Figur 7.

Wie in Figur 8 dargestellt wird durch den negativen Störimpuls S im Spitzenwertgleichrichter 19 das Ausgangssignal TJAM aufgeladen und fällt dann langsam entsprechend der durch den Spitzenwertgleichrichter 19 vorgegebenen Zeitkonstante ab. Da der Störimpuls S relativ dicht vor dem Barcode 2 liegt, liegt das Ausgangssignal TJAM noch oberhalb des Maximalwerts des ersten positiven Peaks des Signals CJAM, der in Figur 8 mit I bezeichnet ist. Dies bedeutet, dass bei der Bewertung des positiven Peaks I, der den Codeanfang des Barcodes 2 bildet, die Bedingung CJAM > TJAM, die im Komparator 26 der Bewertungseinheit abgeprüft wird, nicht erfüllt ist, so dass das Codeanfangsignal JAM nicht gesetzt würde. Damit würde der Codeanfang infolge des aufgetretenden Störimpulses S nicht erkannt werden.

Jedoch wird im Komparator 27 der Bewertungseinheit eine weitere Bedingung für das Setzen des Codeanfangsignal JAM geprüft. Hierzu wird das Signal CJAM zusätzlich mit dem verzögerten Ausgangssignal /TJAMD verglichen.

Wie aus Figur 8 ersichtlich, wird das nicht verzögerte Ausgangssignal /TJAM im Spitzenwertgleichrichter 20 aus den Signalspitzen der positiven Peaks des Signals CWL generiert. Da das Signal CJAM proportional zu dem Analogsignal CWL ist, wird mit einem ansteigenden positiven Peak von CJAM (und auch des Ausgangssignals CWL) das Ausgangssignal /TJAM aufgeladen. Da somit das Ausgangssignal /TJAM proportional zum Signal CJAM ansteigt, können sich /TJAM und CJAM nicht schneiden.

Wie in Figur 8 dargestellt, ist jedoch das verzögerte Ausgangssignal /TJAMD durch das Verzögerungsglied 30 um eine Verzögerungszeit Δt bezüglich des Ausgangssignals /TJAM verzögert. Die Verzögerungszeit Δt ist hinreichend klein gewählt, dass diese in jedem Fall kleiner ist als die Pulsbreiten der positiven und negativen Peaks von CJAM, die durch das Erfassen des Barcodes 2 generiert werden. Vorzugsweise ist Δt an die typischen Signallaufzeiten der Elektronikkomponenten der Auswerteeinheit 5 angepasst. Infolge dieser Verzögerung ist gewährleistet, dass ein Schnittpunkt von CJAM mit /TJAMD erhalten wird.

Durch die gewählte Verzögerungszeit Δt wird damit die Schaltbedingung /TJAMD > CJAM für den ersten positiven Peak des Signals CJAM, der durch die Barcodeerfassung generiert wurde, erfüllt, so dass das Codeanfangsignal JAM gesetzt wird. Damit wird auch im Fall des Auftretens des Störimpulses S das Codeanfangsignal JAM korrekt am Anfang des Barcodes 2 gesetzt.

Da mit dem ersten positiven Peak I von CJAM bzw. CWL nicht nur das Ausgangssignal /TJAM, sondern auch das verzögerte Ausgangssignal /TJAMD aufgeladen wird und sich dieses während der weiteren Barcodedetektion nicht weiter entlädt, ist gewährleistet, dass die Schaltbedingung CJAM > TJAMD nur am Anfang der Barcodedetektion erfüllt ist. Da somit beide Schaltbedingungen für die Generierung des Codeanfangssignals JAM nur einmal am Anfang der Barcodedetektion erfüllt sein können, ist eine eindeutige Erfassung des Codeanfangs gewährleistet.

Die in den Komparatoren 26, 27 definierten Schaltbedingungen für das Setzen des Codeanfangsignals JAM sind asymmetrisch gewählt, da das Signal CJAM nur aus dem Analogsignal CWL, nicht jedoch aus dem Analogsignal CWH abgeleitet ist. Zudem werden als Vergleichswerte für das Signal CJAM das nicht verzögerte Ausgangssignal TJAM, das aus dem Analogsignal CWH abgeleitet ist, und das verzögerte Ausgangssignal /TJAM, das aus dem Analogsignal CWL abgeleitet ist, verwendet. Diese Asymmetrie beruht darauf, dass mit der optoelektronischen Vorrichtung 1 gemäß Figur 1 Barcodes 2 erfasst werden, die aus dunklen Kontrastmustern bestehen, die auf einem hellen Untergrund aufgedruckt sind. Dementsprechend wird bei der Abtastung eines Barcodes 2 mit den Sendelichtstrahlen 8 als erstes Abtastsignal immer zuerst ein Übergang Hell zu Dunkel registriert. Diese Hell-nach-Dunkel-Übergänge werden mit den Ausgangssignalen CWL und daraus abgeleitet mit den Signalfolgen WTB erfasst. Aufgrund der Kenntnis dieser Systemparameter sind die Abfragebedingungen in der Bewertungseinheit auf diese Signalfolgen ausgerichtet. Würden mit der optoelektronischen Vorrichtung 1 jedoch Barcodes 2 erfasst, die aus hellen Kontrastmustern bestehen, die auf einen dunklen Untergrund aufgebracht sind, müßten die Abfragebedingungen in der Bewertungseinheit dementsprechend invertiert werden.

### Bezugszeichenliste

- (1): Optoelektronische Vorrichtung
- (2): Barcodes
- (2a): dunkles Strichelement
- (2b): helles Strichelement
- (3): Sendeeinheit
- (4): Empfangseinheit
- (5): Auswerteeinheit
- (6): Sender
- (7): Sendeoptik
- (8): Sendelichtstrahlen
- (9): Ablenkeinheit
- (10): Empfangslichtstrahlen
- (11): Empfänger
- (12): Signalvorverarbeitungsstufe
- (13): Empfangsoptik
- (14): Transimpedanzverstärker
- (15): Differenzierer
- (16): Tiefpassfilter
- (17): Verstärker
- (18): Verstärker
- (19): Spitzenwertgleichrichter
- (20): Spitzenwertgleichrichter
- (21): Differenzierer
- (22): RC-Glied
- (23): Vergleichseinheit
- (24): Vergleichseinheit
- (25): Microcontroller
- (26): Komparator
- (27): Komparator
- (28): UND-Glied
- (29): Spannungsteiler
- (30): Verzögerungsglied

- JAM: Codeanfangsignal
- CJAM: Signal
- TJAM: Ausgangssignal
- /TJAM: Ausgangssignal
- /TJAMD: verzögertes Ausgangssignal

- TWIN: adaptiver Schwellwert

- BTW: Signalfolge
- WTB: Signalfolge

- I: erster positiver Peak des Signals CJAM
- S: negativer Störimpuls

## Patentansprüche

1. Optoelektronische Vorrichtung zur Erfassung von Barcodes mit einem Sendelichtstrahlen emittierenden Sender, wobei die Sendelichtstrahlen mittels einer Ablenkeinheit über die Barcodes geführt sind, mit einem Empfänger zum Empfang der von den Barcodes als Empfangslichtstrahlen zurückreflektierten Sendelichtstrahlen, mit einem Differenzierer zur Differenzierung des am Ausgang des Empfängers anstehenden Empfangssignals und mit einer Auswerteeinheit zur Ermittlung der Kodierungen der Barcodes aus dem differenzierten Empfangssignal, **dadurch gekennzeichnet, dass** die Auswerteeinheit (5) eine Bewertungseinheit zur Generierung eines Codeanfangsignals (JAM) aufweist, welcher die Ausgangssignale TJAM und /TJAM zweier Spitzenwertgleichrichter (19, 20) zugeführt sind, wobei im ersten Spitzenwertgleichrichter (20) die positiven Spitzenwerte und im zweiten Spitzenwertgleichrichter (19) die negativen Spitzenwerte des differenzierten Empfangssignals gleichgerichtet werden, und wobei das Ausgangssignal /TJAM wenigstens eines Spitzenwertgleichrichters (20) mittels eines Verzögerungsglieds (30) verzögert ist, und dass in der Bewertungseinheit das mit einem Faktor a mit 0 < a < 1 multiplizierte differenzierte Empfangssignal mit den Ausgangssignalen der Spitzenwertgleichrichter (19, 20) zur Generierung des Codeanfangsignal (JAM) verglichen wird.

2. Optoelektronische Vorrichtung nach Anspruch 1, **dadurch gekennzeichnet, dass** die Verzögerungszeit an die Signallaufzeiten der elektrischen Komponenten der Auswerteeinheit (5) angepasst ist.

3. Optoelektronische Vorrichtung nach einem der Ansprüche 1 oder 2, **dadurch gekennzeichnet, dass** das differenzierte Empfangssignal parallel in einem ersten Verstärker (17) zur Generierung eines Analogsignals CWH mit einem Verstärkungsfaktor -K, wobei K > 0, verstärkt wird, und in einem zweiten Verstärker (18), zur Generierung eines Analogsignals CWL mit einem Verstärkungsfaktor +K verstärkt wird.

4. Optoelektronische Vorrichtung nach Anspruch 3, **dadurch gekennzeichnet, dass** bei aus dunklen Strichelementen (2a) auf einem hellen Untergrund gebildeten Barcodes (2) das in dem Verzögerungsglied (30) verzögerte Ausgangssignal /TJAMD durch Spitzenwertgleichrichtung des Analogsignals CWL generiert ist.

5. Optoelektronische Vorrichtung nach Anspruch 4, **dadurch gekennzeichnet, dass** das Ausgangssignal TJAM durch Spitzenwertgleichrichtung des Analogsignals CWH generiert ist.

6. Optoelektronische Vorrichtung nach einem der Ansprüche 1 - 5, **dadurch gekennzeichnet, dass** das Verzögerungsglied (30) von einem Allpass gebildet ist.

7. Optoelektronische Vorrichtung nach einem der Ansprüche 1 - 6, **dadurch gekennzeichnet, dass** die Bewertungseinheit eine Komparatoreinheit zur Generierung des Codeanfangsignals (JAM) aufweist.

8. Optoelektronische Vorrichtung nach Anspruch 7, **dadurch gekennzeichnet, dass** das Codeanfangsignal (JAM) als binäres Signal ausgebildet ist.

9. Optoelektronische Vorrichtung nach einem der Ansprüche 3 - 8, **dadurch gekennzeichnet, dass** zur Bestimmung der Kantenlagen der Strichelemente (2a, b) der Barcodes (2) die Maxima der Analogsignale CWH, CWL bestimmt werden.

10. Optoelektronische Vorrichtung nach Anspruch 9, **dadurch gekennzeichnet, dass** zur Bestimmung der Maxima der Analogsignale CWH, CWL ein weiterer Differenzierer (21) vorgesehen ist.

11. Optoelektronische Vorrichtung nach Anspruch 10, **dadurch gekennzeichnet, dass** zur Eliminierung von Störeinflüssen bei der Bestimmung der Kantenlagen der Strichelemente (2a, b) der Barcodes (2) die Ausgangssignale CWH, CWL mit einem adaptiven Schwellwert TWIN bewertet werden.

12. Optoelektronische Vorrichtung nach Anspruch 11, **dadurch gekennzeichnet, dass** der adaptive Schwellwert TWIN aus den Ausgangssignalen TJAM und /TJAM abgeleitet ist.

13. Optoelektronische Vorrichtung nach einem der Ansprüche 11 oder 12, **dadurch gekennzeichnet, dass** mittels des adaptiven Schwellwerts und des weiteren Differenzierers (21) Signalfolgen WTB, BTW generiert werden, deren negative Flanken die Kantenlagen der Strichelemente (2a, b) des Barcodes (2) definieren.

14. Optoelektronische Vorrichtung nach Anspruch 13, **dadurch gekennzeichnet, dass** zur Dekodierung eines Barcodes (2) die Signalfolgen WTB, BTW einem RS-Flip-Flop zugeführt sind.

15. Optoelektronische Vorrichtung nach Anspruch 14, **dadurch gekennzeichnet, dass** die mit dem RS-Flip-Flop generierten Signale mit dem Codeanfangsignal (JAM) markiert sind.

## Claims

1. Optoelectronic device for detecting barcodes, comprising a transmitter emitting transmitted light beams, wherein the transmitted light beams are guided by means of a deflecting unit over the barcodes, a receiver for reception of the transmitted light beams reflected back by the barcodes as received light beams, a differentiator for differentiation of the received signals present at the output of the receiver and an evaluating unit for ascertaining the codings of the barcodes from the differentiated received signal, **characterised in that** the evaluating unit (5) comprises a evaluating unit for generation of a code start signal (JAM), to which the output signals TJAM and /TJAM of two peak value rectifiers (19, 20) are fed, wherein the positive peak values of the differentiated received signal are rectified in a first peak value rectifier (20) and the negative peak values of the differentiated received signal are rectified in the second peak value rectifier (19), and wherein the output signal /TJAM of at least one peak value rectifier (20) is delayed by means of a delay element (30), and that the differentiated received signal multiplied by a factor a, wherein with 0 < a < 1, is compared in the evaluating unit with the output signals of the peak value rectifiers (19, 20) for generating the code start signal (JAM).

2. Optoelectronic device according to claim 1, **characterised in that** the delay time is adapted to the signal transit times of the electrical components of the evaluating unit (5).

3. Optoelectronic device according to one of claims 1 and 2, **characterised in that** the differentiated received signal is amplified in parallel by an amplification factor -K in a first amplifier (17) for generating an analog signal CWH and is amplified by a second amplification factor +K in a second amplifier (18) for generating an analog signal CWL.

4. Optoelectronic device according to claim 3, **characterised in that** in the case of barcodes (2) formed from dark bar elements (2a) on a bright background the output signal /TJAMD delayed in the delay element (30) is generated by peak value rectification of the analog signal CWL.

5. Optoelectronic device according to claim 4, **characterised in that** the output signal TJAM is generated by peak value rectification of the analog signal CWH.

6. Optoelectronic device according to one of claims 1 to 5, **characterised in that** the delay element (30) is formed by an all-pass.

7. Optoelectronic device according to one of claims 1 to 6, **characterised in that** the evaluating unit comprises a comparator unit for generating the code start signal (JAM).

8. Optoelectronic device according to claim 7, **characterised in that** the code start signal (JAM) is formed as a binary signal.

9. Optoelectronic device according to one of claims 3 to 8, **characterised in that** the maxima of the analog signals CWH, CWL are determined for determination of the edge positions of the bar elements (2a, b) of the barcodes (2).

10. Optoelectronic device according to claim 9, **characterised in that** a further differentiator (21) is provided for determination of the maxima of the analog signals CWH, CWL.

11. Optoelectronic device according to claim 10, **characterised in that** the output signals CWH, CWL are weighted by an adaptive threshold value TWIN for elimination of interferring influences in the determination of the edge positions of the bar elements (2a, b) of the barcodes (2).

12. Optoelectronic device according to claim 11, **characterised in that** the adaptive threshold value TWIN is derived from the output signals TJAM and /TJAM.

13. Optoelectronic device according to one of claims 11 and 12, **characterised in that** signal trains WTB, BTW, the negative flanks of which define the edge positions of the bar elements (2a, b) of the barcode (2), are generated by means of the adaptive threshold value and the further differentiator (21).

14. Optoelectronic device according to claim 13, **characterised in that** the signal trains WTB, BTW are fed to an RS flip-flop for the decoding of a bar code (2).

15. Optoelectronic device according to claim 14, **characterised in that** the signals generated by the RS flip-flop are marked with the code start signal (JAM).

## Revendications

1. Dispositif optoélectronique pour la saisie de codes à barres comprenant un émetteur émettant des rayons lumineux d'émission, les rayons lumineux d'émission étant guidés sur les codes à barres au moyen d'une unité de déviation, comprenant un récepteur pour la réception des rayons lumineux d'émission réfléchis par les codes à barres sous forme de rayons lumineux de réception, comprenant un différenciateur pour différencier le signal de réception présent à la sortie du récepteur et comprenant une unité d'interprétation pour déterminer les codages des codes à barres à partir du signal de réception différencié, **caractérisé en ce que** l'unité d'interprétation (5) présente une unité d'évaluation pour générer un signal de début de code (JAM), à laquelle sont amenés les signaux de sortie TJAM et /TJAM de deux redresseurs de valeurs de crête (19, 20), le premier redresseur de valeurs de crête (20) redressant les valeurs de crête positives et le second redresseur de valeurs de crête (19) les valeurs de crête négatives du signal de réception différencié, et le signal de sortie /TJAM d'au moins un redresseur de valeurs de crête (20) étant retardé au moyen d'un élément de retard (30), et que le signal de réception différencié multiplié par un facteur a, avec 0 < a < 1, est comparé dans l'unité d'évaluation avec les signaux de sortie des redresseurs de valeurs de crête (19, 20) pour générer le signal de début de code (JAM).

2. Dispositif optoélectronique selon la revendication 1, **caractérisé en ce que** le temps de retard est adapté aux temps de parcours des signaux des composants électroniques de l'unité d'interprétation (5).

3. Dispositif optoélectronique selon l'une des revendications 1 ou 2, **caractérisé en ce que** le signal de réception différencié est parallèlement amplifié avec un facteur d'amplification -K**,** avec K > 0, dans un premier amplificateur (17) pour générer un signal analogique CWH et amplifié avec un facteur d'amplification +K dans un second amplificateur (18) pour générer un signal analogique CWL.

4. Dispositif optoélectronique selon la revendication 3, **caractérisé en ce qu'**en cas de codes à barres (2) formés d'éléments linéaires sombres (2a) sur un fond clair, le signal de sortie /TJAMD retardé dans l'élément de retard (30) est généré par redressement des valeurs de crête du signal analogique CWL.

5. Dispositif optoélectronique selon la revendication 4, **caractérisé en ce que** le signal de sortie TJAM est généré par redressement des valeurs de crête du signal analogique CWH.

6. Dispositif optoélectronique selon l'une des revendications 1 à 5, **caractérisé en ce que** l'élément de retard (30) est formé par un filtre passe-tout.

7. Dispositif optoélectronique selon l'une des revendications 1 à 6, **caractérisé en ce que** l'unité d'évaluation présente une unité de comparaison pour générer le signal de début de code (JAM).

8. Dispositif optoélectronique selon la revendication 7, **caractérisé en ce que** le signal de début de code (JAM) est conçu comme un signal binaire.

9. Dispositif optoélectronique selon l'une des revendications 3 à 8, **caractérisé en ce que** pour déterminer les positions des bords des éléments linéaires (2a, b) des codes à barres (2), on détermine les maxima des signaux analogiques CWH, CWL.

10. Dispositif optoélectronique selon la revendication 9, **caractérisé en ce qu'**il est prévu un autre différenciateur (21) pour déterminer les maxima des signaux analogiques CWH, CWL.

11. Dispositif optoélectronique selon la revendication 10, **caractérisé en ce que** pour éliminer les influences parasites lors de la détermination des positions des bords des éléments linéaires (2a, b) des codes à barres (2), les signaux de sortie CWH, CWL sont évalués avec une valeur seuil adaptative TWIN.

12. Dispositif optoélectronique selon la revendication 11, **caractérisé en ce que** la valeur seuil adaptative TWIN est déduite des signaux de sortie TJAM et /TJAM.

13. Dispositif optoélectronique selon l'une des revendications 11 ou 12, **caractérisé en ce que** l'on génère au moyen de la valeur seuil adaptative et de l'autre différenciateur (21) des suites de signaux WTB, BTW dont les flancs négatifs définissent les positions des bords des éléments linéaires (2a, b) du code à barres (2).

14. Dispositif optoélectronique selon la revendication 13, **caractérisé en ce que** pour décoder un code à barres (2), les suites de signaux WTB, BTW sont amenées à une bascule RS.

15. Dispositif optoélectronique selon la revendication 14, **caractérisé en ce que** les signaux générés avec la bascule RS sont marqués avec le signal de début de code (JAM).
